# FASCICULE DE BREVET EUROPEEN

(11) **EP 0 859 944 B1**
(45) Date de publication et mention de la délivrance du brevet: **19.03.2003**
(21) Numéro de dépôt: 96938283.7
(22) Date de dépôt: 08.11.1996
(51) Int. Cl.: G01F 11/18, G01F 11/24

(54) **FLACON DOSEUR DE POUDRE**
VORRICHTUNG ZUM DOSIEREN VON PULVERFÖRMIGEN STOFFEN
POWDER DISPENSER

(30) Priorité: 08.11.1995 FR 9513188
(43) Date de publication de la demande: 26.08.1998
(73) Titulaire: AIRSEC, 94600 Choisy-le-Roi (FR)
(72) Inventeur: LANCESSEUR, Didier, F-94600 Choisy-le-Roi (FR); LECOMTE, Jeanne-Marie, F-75003 Paris (FR); JOULIN, Yves, F-75003 Paris (FR)
(74) Mandataire: Roger-Petit, Georges
(86) Numéro de dépôt international: FR9601766
(87) Numéro de publication internationale: WO97017593

(56) Documents cités:
- DE-U- 9 309 686
- FR-A- 847 135
- GB-A- 2 150 117
- US-A- 2 584 781
- US-A- 2 750 072

## Description

L'invention concerne un flacon doseur de poudre, et notamment de poudre à usage pharmaceutique.

Il est utile et souvent nécessaire de pouvoir doser de façon précise une quantité de poudre destinée à un usage alimentaire ou pharmaceutique. L'utilisation de cuillers doseuses pour prélever directement le produit, la solution la plus simple, présente des risques de perte de produit à chaque ouverture du récipient contenant la poudre, des risques d'altération du produit par contamination accidentelle et surtout des risques d'intoxication si la poudre est une poudre médicamenteuse, en particulier destinée à soigner des maladies infantiles, les enfants pouvant être amenés à en prélever des quantités importantes.

GB-A-2 150 117 décrit un flacon doseur de poudre comprenant un corps supérieur contenant la poudre à délivrer, fermé par un couvercle, dont le sommet du fond conique dirigé vers le bas constitue l'orifice de sortie de la poudre, un corps inférieur comportant un orifice de délivrance de la poudre, et un poussoir comportant un tube doseur mobile entre l'orifice de sortie de la poudre et l'orifice de délivrance de là poudre. Ce dispositif ne comporte aucun dispositif de type sécurité enfants.

Il serait bon de pouvoir disposer d'un flacon doseur de poudre dans lequel la poudre est contenue dans un espace essentiellement clos, dans lequel une action sur un élément d'actionnement permet la délivrance d'une quantité donnée de poudre, ladite action pouvant être répétée pour obtenir la quantité souhaitée de poudre, du type décrit ci-dessus et dans lequel un ou plusieurs éléments assurent à divers degrés une sécurité dite « enfants ».

Afin de faciliter la collecte de la poudre délivrée, on peut prévoir une cuiller de réception de doses associée au flacon doseur, avec des moyens de fixation de cette cuiller sur la partie externe du corps inférieur grâce à des éléments de fixation. La délivrance du produit dans une cuiller fournit deux avantages.
- le centrage de l'orifice de délivrance du flacon doseur par rapport à un verre, en vue de la dilution de la poudre et de son absorption, n'est pas toujours facile tandis que la réception dans la cuiller permet ensuite de verser sans difficulté la poudre dans le récipient approprié ;
- l'utilisation d'une cuiller dont le volume est un multiple de celui d'un élément doseur et qui est graduée en prenant pour unité le volume de l'élément doseur, permet de vérifier facilement le nombre d'actionnements du poussoir, et permet de déterminer si l'on a réellement obtenu la dose finale souhaitée.

L'utilisation d'une telle cuiller avec les éléments de fixation sur le fond du corps inférieur fournit déjà une première sécurité « enfants » car, si la cuiller est laissée en place sur le flacon doseur et qu'un enfant essaye de se servir de la poudre, il devra effectuer un premier mouvement dans un sens sur le poussoir, puis un mouvement de rotation pour retirer la cuiller et avoir accès à la poudre. Ces deux opérations, simples pour un adulte, posent des problèmes aux enfants surtout en bas âge.

Une meilleure sécurité est obtenue selon la présente invention qui fournit un flacon doseur comprenant un corps supérieur contenant la poudre à délivrer, fermé après remplissage par un couvercle inamovible, dont le fond comporte un orifice de sortie de la poudre, un corps inférieur à fond inamovible comportant un orifice de délivrance de la poudre, un dispositif doseur comprenant un poussoir et mobile entre au moins un orifice de sortie de la poudre et entre au moins un orifice de délivrance de la poudre, caractérisé en ce que le fond du corps inférieur comporte des éléments de fixation d'une cuiller de réception de dose, cette cuiller ayant des éléments d'accrochage qui coopèrent avec des éléments de guidage ou de butée liés au dispositif mobile pour permettre la délivrance de la poudre dans la cuiller.

Les moyens de fixation sont avantageusement une jupe circulaire sur la partie externe du fond du flacon doseur et des fentes en arc de cercle concentriques à la jupe, tandis que la cuiller présente des pattes d'accrochage avec des évidements de blocage dans les fentes.

Dans une première variante, l'orifice de sortie du corps supérieur et l'orifice de délivrance du corps inférieur sont centrés sur deux axes parallèles à l'axe de déplacement du poussoir dont au moins celui correspondant à l'orifice de sortie du corps supérieur n'est pas confondu avec l'axe de déplacement du poussoir. Un tube doseur monté de façon articulée sur le poussoir comporte des éléments de guidage de telle sorte que, pendant la course du poussoir, les éléments de guidage prennent appui sur lesdites pattes d'accrochage en déplaçant angulairement le tube doseur entre l'orifice de sortie du fond du corps supérieur et l'orifice de délivrance du fond du corps inférieur.

Le tube doseur est monté, à l'extrémité d'une aile d'un bras en L, l'aile libre venant prendre appui à l'extérieur de l'une des pattes d'accrochage de la cuiller mise en place ; le tube doseur est équipé à sa partie inférieure (en position de fonctionnement) d'une plaque de guidage dont un bord arrondi vient en appui à l'intérieur de l'autre patte d'accrochage et, à sa partie supérieure (en position de fonctionnement) d'une plaque de dimension telle qu'elle obture l'orifice du fond du corps supérieur lorsque le tube doseur n'est pas aligné avec celui-ci, et le bras en L est articulé, le long de son arête, sur une tige faisant saillie du poussoir parallèlement à l'axe de déplacement de celui-ci.

De la sorte, lorsque la cuiller n'est pas en place autour de l'orifice de délivrance du corps inférieur, si l'on appuie sur le poussoir, il y a déplacement du tube doseur parallèlement à l'axe de déplacement du poussoir, mais le tube doseur ne se trouvera pas en alignement avec l'orifice de délivrance du corps inférieur. Pour obtenir de la poudre, il faut d'abord mettre en place la cuiller de réception, actionner le poussoir et retirer la cuiller par un mouvement de rotation. Un enfant, s'il arrive à effectuer ces divers mouvements de façon appropriée, se lassera vite de les répéter pour obtenir une quantité importante de poudre.

Selon une deuxième variante, la partie conique du corps supérieur se termine par une partie plane circulaire comportant deux orifices de sortie diamétralement alignés, le fond du corps inférieur comporte deux orifices de délivrance diamétralement alignés perpendiculairement aux orifices de sortie, un barillet à au moins quatre alvéoles régulièrement réparties est logé entre le corps supérieur et le corps inférieur et est muni de moyens d'entraînement en rotation actionnés par le poussoir. Deux alvéoles du barillet sont alignées avec les orifices de sortie et deux autres avec les orifices de délivrance. Par rotation du barillet, la poudre est amenée aux orifices de délivrance. A titre d'exemple, la partie externe du barillet est une roue à rochet coopérant avec un bras à crochet monté sur le poussoir. Un deuxième bras monté sur le poussoir porte un élément venant en butée sur un plot ou butée de faible hauteur du fond du corps inférieur. La présence de la patte d'accrochage et l'élasticité du bras font que le bras en butée se soulève au-dessus du plot et que le poussoir peut être enfoncé.

Les alvéoles du barillet sont avantageusement de forme tronconique car sur le plan pratique c'est la forme qui minimise le mieux les risques de colmatage par la poudre.

On utilise de préférence un barillet comportant huit alvéoles. De ce fait, on a la répartition suivante lors d'un mouvement du poussoir :
- deux alvéoles se remplissant
- deux alvéoles pleines en attente
- deux alvéoles se vidant
- deux alvéoles vides en attente

On notera que, du fait de l'utilisation de huit alvéoles, il faut lors de la première utilisation du flacon doseur appuyer deux fois sur le poussoir pour amener les alvéoles pleines, initialement en alignement avec les orifices de sortie, en alignement avec les orifices de délivrance. Cette double poussée constitue pour l'utilisateur une garantie que le flacon n'a pas encore été utilisé.

En outre, on peut tirer parti du mouvement de rotation du barillet pour adjoindre un agitateur dans le corps supérieur du flacon doseur : en utilisant un agitateur à quatre pales en croix, une rotation de 45° d'un barillet à huit alvéoles (une poussée) provoque un brassage de la poudre sur 360°C. Ce brassage empêche l'agglomération de la poudre, agglomération qui peut aller jusqu'à la prise en masse selon le caractère plus ou moins hygroscopique de la poudre.

D'autres caractéristiques et avantages de la présente invention apparaîtront à la lecture de la description détaillée qui suit, faite en référence aux dessins annexés dans lesquels :
les figures 1A à 1F illustrent les différents constituants d'une première variante d'un flacon doseur selon l'invention,
les figures 2A à 2C illustrent le fonctionnement d'un flacon doseur selon les figures 1A à 1F,
les figures 3A à 3G illustrent les différents constituants d'une deuxième variante d'un flacon doseur,
la figure 4A est une vue de dessus du corps principal d'un flacon doseur selon une deuxième variante,
la figure 4B est une vue en coupe selon la ligne B-B de la figure 4A,
la figure 4C est une vue en coupe selon la ligne C-C de la figure 4B,
la figure 4D est une vue en coupe selon la ligne D-D de la figure 4C,
les figures 5A à 5C et 6A à 6C sont respectivement des vues en coupe et en plan illustrant la coopération du poussoir, du barillet et de la cuiller ; et,
les figures 7A et 7B illustrent les capuchons pour les deux variantes de flacon doseur.

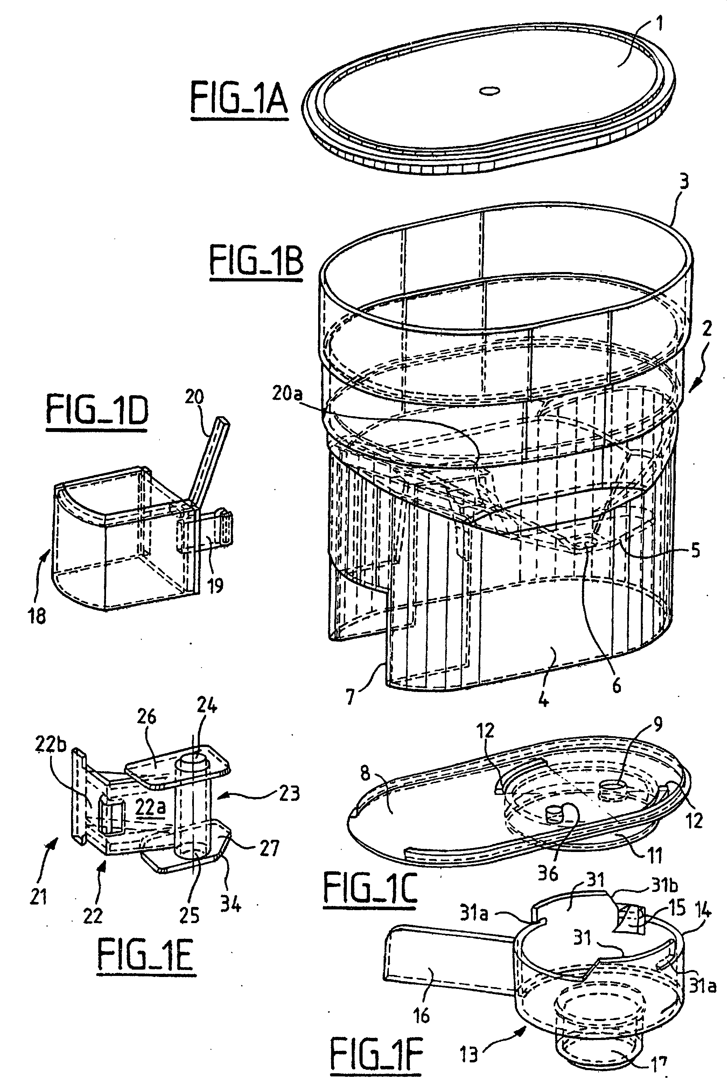

Les différents constituants d'un flacon doseur selon le premier mode de réalisation de l'invention sont représentés sur les figures 1A à 1F. Le flacon doseur a de manière générale une section sensiblement elliptique, qui n'est nullement obligatoire mais peut faciliter la prise en main et la manipulation. Cette section elliptique offre en outre l'avantage, en plaçant le poussoir dans l'une des parties arrondies de l'ellipse de permettre un déplacement selon le grand axe de l'ellipse, permettant de conserver au flacon doseur une dimension facilitant sa prise en main, ce qui ne serait pas le cas en présence d'une section circulaire lorsque l'élément doseur se déplace longitudinalement.

La figure 1A représente un couvercle 1 destiné à fermer la partie supérieure du corps principal 2 du flacon doseur, après introduction de la poudre à délivrer. Le couvercle sera fixé de façon inamovible, par exemple par soudage. Le corps principal 2 du flacon doseur comprend un corps supérieur 3 et un corps inférieur 4 séparés par une cloison 5 ou fond du corps supérieur. Un orifice de sortie 6 est prévu dans le fond 5 et, pour faciliter l'écoulement de la poudre contenue dans le corps supérieur 3, le fond 5 sera globalement conique avec l'orifice de sortie 6 situé au sommet du cône dirigé vers le bas. Une découpe 7 est prévue dans la jupe délimitant le corps inférieur 4, la découpe 7 définissant une ouverture centrée sur le grand axe de l'ellipse. Cette découpe est destinée à recevoir un poussoir qui sera décrit ci-après, de même que sera décrit ci-après un élément doseur qui vient prendre place dans le corps inférieur 4.

La figure 1C illustre une pièce constituant le fond 8 du corps inférieur et qui sera soudée au bord périphérique du corps 4 après mise en place de l'élément poussoir et de l'élément doseur. Un orifice de délivrance 9 de la poudre est prévu dans le fond 8. Il est prévu du côté interne du fond 8 une butée 36 dont l'utilité sera décrite ci-après, ainsi que du côté externe du fond une jupe circulaire 11. La jupe 11 et l'orifice de délivrance 9 ne sont généralement pas concentriques mais l'orifice 9 est à l'intérieur de la jupe 11. Deux fentes 12 en arcs de cercle entourent la jupe 11 en lui étant concentriques.

La jupe 11 et les fentes 12 permettent la mise en place d'une cuiller 13 (figure 1F). Cette cuiller 13 comporte une partie réceptacle 14 s'adaptant à l'extérieur de la jupe 11. Elle comporte sur son bord supérieur deux pattes d'accrochage 31 comportant des évidements 31a et des bords obliques 31b. La cuiller comporte aussi par exemple un bec verseur 15 et un manche 16 disposés à 90°. Le volume intérieur de la cuiller est calculé pour être un multiple de la quantité de poudre contenue dans l'élément doseur situé à l'intérieur du corps inférieur du flacon et le volume recherché peut être obtenu en jouant sur la hauteur de la cuiller et/ou en ajoutant une portion inférieure 17 de plus faible diamètre. La cuiller peut être graduée.

La figure 1D représente un élément poussoir 18 de forme générale cubique, avec une partie arrière légèrement arrondie pour venir s'aligner avec la paroi latérale du corps inférieur 4. A la partie avant de l'élément poussoir, il est prévu un bras 19 relié à un élément doseur 21 décrit ci-après. L'élément poussoir 18 porte une tige 20 dirigée obliquement vers le haut et coopérant avec une surface 20a de forme complémentaire pratiquée dans le fond 5 du corps supérieur du flacon. La coopération de cette tige 20 et de la surface 20a forme un élément de rappel repoussant le poussoir en position initiale lorsque la pression sur le poussoir est relâchée.

Un élément doseur 21 est monté sur la tige 19 de l'élément poussoir par l'intermédiaire d'un bras 22 qui sera détaillé ci-après. Sur ce bras 22 est monté un tube doseur 23 dont le volume interne correspond à une dose ou une fraction de dose. En position de repos, l'orifice supérieur 24 du tube doseur 23 est en coïncidence avec l'orifice de sortie 6 du corps supérieur du flacon doseur et le tube doseur se remplit alors de poudre ; par poussée sur l'élément poussoir 18, le tube doseur est déplacé jusqu'à ce que son orifice inférieur 25 soit en alignement vertical avec l'orifice de délivrance 9 du fond 8 du corps inférieur, ce qui libère alors la poudre dans la cuiller 13. Il est prévu à la partie supérieure du tube doseur 23 une plaquette 26 de dimensions telles qu'elle obture l'orifice 6 lorsque le tube doseur 23 n'est plus en alignement vertical avec celui-ci. Une plaquette 27 est également prévue à la partie inférieure du tube doseur, plaquette dont la fonction sera donnée ci-après.

On va maintenant décrire de façon détaillée le mode de fonctionnement de ce flacon doseur selon l'invention.

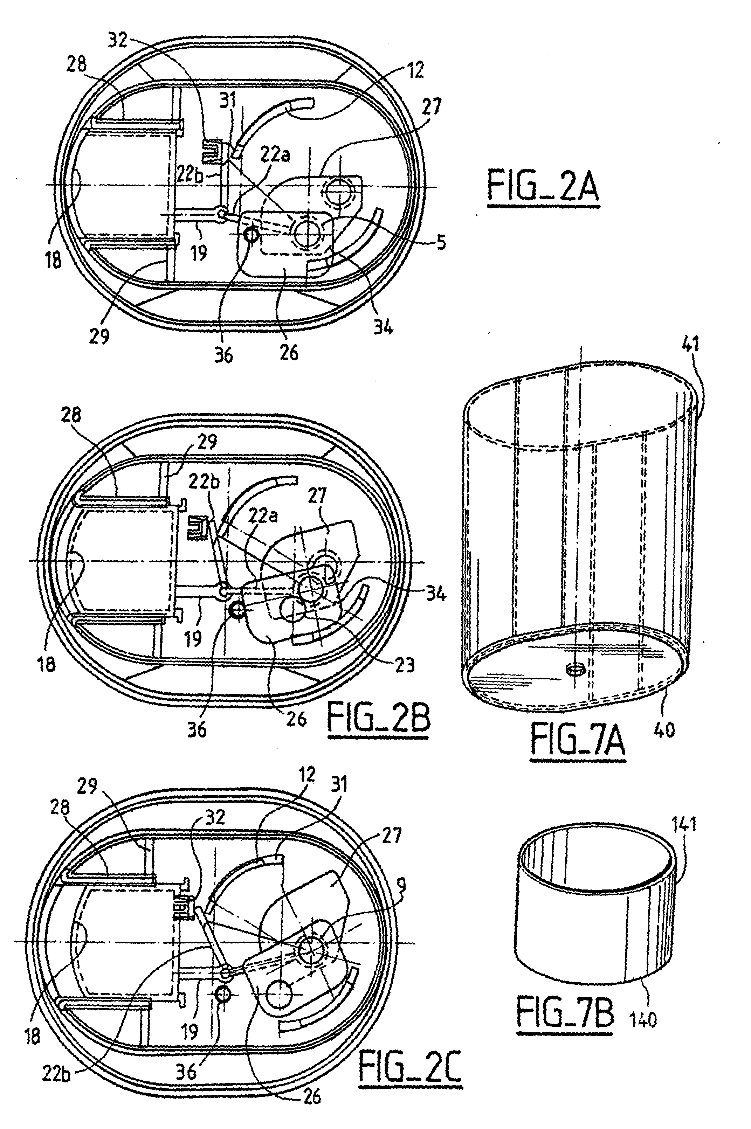

On notera tout d'abord qu'une caractéristique légèrement visible sur la figure 1B apparaît clairement sur les figures 2A à 2C. Le corps supérieur 3 a une section elliptique légèrement supérieure à celle du corps inférieur 4, ce qui permet de former sur les parties allongées de l'ellipse des surfaces obliques 33 sur lesquelles les doigts d'une main peuvent prendre appui. En outre, ces surfaces 33 participent à l'intérieur du corps supérieur à la forme généralement conique du fond du corps supérieur.

Les figures 2A, 2B et 2C représentent respectivement la position repos du poussoir et de l'élément doseur du flacon doseur représenté sur les figures 1A à 1F ; la position à demi-course de l'élément poussoir ; et la position fin de course.

L'orifice de sortie 5 et l'orifice de délivrance 9 ne sont pas alignés selon l'axe de déplacement du poussoir mais sont centrés sur des axes parallèles à cet axe. Éventuellement, l'orifice de délivrance est centré sur un axe parallèle proche ou confondu de l'axe de déplacement du poussoir. Par contre, l'orifice de sortie 5 du corps supérieur 3 est décalé angulairement de l'orifice de sortie 5. L'élément doseur 23 est monté sur un bras 22 en L, à l'extrémité de l'aile 22a de ce bras. L'aile libre 22b vient prendre appui sur l'extrémité et l'extérieur d'une patte d'accrochage 31 de la cuiller réceptable 13 installée dans une fente 12. Il est de préférence prévu un élément 32 faisant saillie vers le bas à partir du fond 5 du corps supérieur, élément 32 contre lequel vient buter l'aile libre 22b du côté opposé à celui où elle est en contact avec la patte 31. Le bras 19 de liaison du poussoir 18 est parallèle à l'axe de déplacement du poussoir et porte de façon articulée le bras en L le long de son arête. L'angle entre les bras 22a et 22b est égal à 90° ou plus, selon le décalage entre l'orifice de sortie 5 et l'orifice de libération 9. Le tube doseur est équipé à sa partie inférieure d'une plaquette de guidage 27 dont un bord arrondi 34 vient en appui à l'intérieur d'une deuxième patte d'accrochage de la cuiller 13 et, à sa partie supérieure, d'une plaquette 26 (voir description de la figure 1E).

Lorsque l'on presse sur le poussoir 18, la partie arrondie 34 de l'élément de guidage 27 vient porter sur la patte d'accrochage 31, et, du fait de l'articulation du bras 22 sur le bras 19, le déplacement du tube doseur se fait non plus dans l'axe de déplacement du poussoir mais en rotation de façon à venir amener le tube doseur en alignement vertical avec l'orifice de délivrance 9.

Lorsque l'on relâche la pression sur l'élément poussoir, l'élément de rappel 20 coopérant avec la surface 20a ramène l'élément poussoir à sa place, et le tube doseur en alignement vertical avec l'orifice de sortie du corps supérieur. La butée 36 (fig. 1 C) retient l'élément de guidage 27 dans cette position d'alignement et assure un positionnement précis du poussoir 18 dans son logement.

On voit également sur la figure 2C que la butée 36 retient également le bras 19 en fin de course.

Un tel ensemble poussoir plus élément doseur monté sur un bras en L, avec des orifices de sortie et de délivrance décalés fait que le tube doseur ne peut se trouver au-dessus de l'orifice de délivrance que si la cuiller 13 est en place dans les fentes 12. En l'absence des pattes d'accrochage coopérant avec la surface arrondie 34 de guidage de l'élément doseur, le tube doseur se déplacera parallèlement au grand axe de l'ellipse et ne viendra pas en alignement vertical avec l'orifice de délivrance.

L'installation de la cuiller réceptacle par un enfant implique l'enfilage des pattes d'accrochage 31 dans les fentes 12 et la rotation pour le blocage dans les évidements 31b de celles-ci, deux mouvements qui ne sont pas faciles à coordonner pour un enfant et qui doivent être suivis d'une poussée sur l'élément poussoir puis de la combinaison des deux mouvements inverses, il est peu probable qu'un enfant ait la patience, si jamais il y arrive, de répéter plusieurs fois ces mouvements pour obtenir une quantité de poudre dépassant la valeur d'une seule cuiller.

Dans la deuxième variante du flacon doseur selon l'invention, l'élément doseur se déplace en rotation et le flacon doseur est alors de forme générale cylindrique.

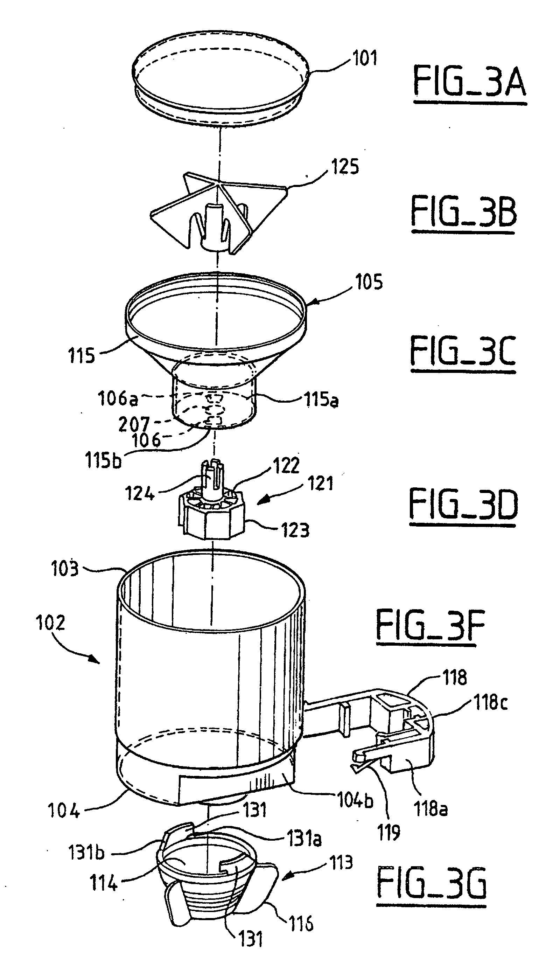

Le flacon doseur comprend un couvercle 101 (figure 3A) de forme circulaire ayant la même fonction que le couvercle 1 et est fixé à la partie supérieure du corps principal 102, par exemple par soudage.

Le corps principal 102 du flacon comporte un corps supérieur 103 et un corps inférieur 104 d'un seul tenant, une trémie 105 comportant une partie 115 en entonnoir et une partie cylindrique inférieure 115a étant logée dans le corps supérieur 103. La partie cylindrique inférieure 115a de la trémie est fermée par une plaque 115b percée de deux orifices de sortie 106 et 106a diamétralement alignés (la forme de ces deux orifices de sortie est la même que celle des alvéoles du barillet doseur décrit ci-dessous). Un orifice central 207 est prévu (fig. 3C) dans cette plaque. Une séparation partielle 107a est prévue entre le corps supérieur 103 et le corps inférieur 104, pour terminer la séparation produite par la plaque 115b et former un logement pour un poussoir 118 dans un évidement 107 de la paroi du corps inférieur 104.

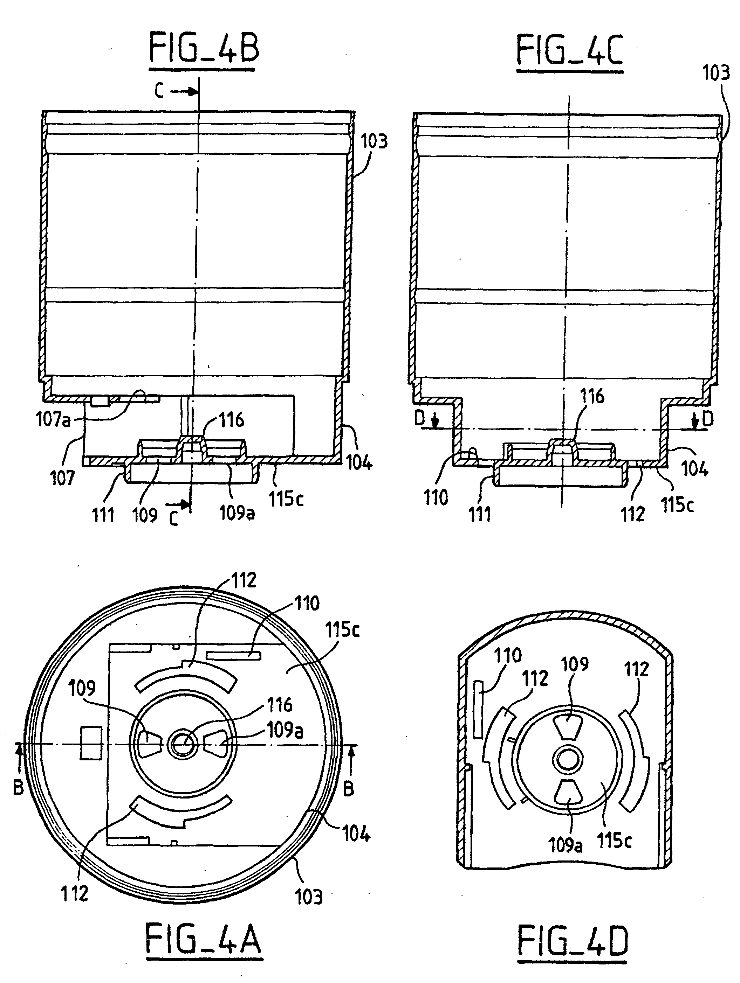

La plaque 115b constitue la séparation entre le corps supérieur 103 et un barillet doseur 121 logé dans le corps inférieur 104 tandis qu'une plaque 115C forme le fond du corps inférieur 104. Pour des raisons de lisibilité, la structure de la plaque 115C a été omise sur la fig. 3F mais est représentée aux figures 4A à 4D. La plaque 115C est percée de deux orifices de délivrance 109 et 109a diamétralement alignés perpendiculairement aux orifices de sortie 106 et 106a de la plaque 115b. Un axe central 116 fait saillie de cette plaque. La plaque 115C, constituant le fond du corps inférieur, comporte du côté interne une butée 110 et du côté externe une jupe circulaire 111, autour des orifices de délivrance 109 et 109a.

Des fentes 112 en arc de cercle entourent la jupe 111 en lui étant concentriques.

Comme dans la première variante, la jupe 111 et les fentes 112 permettent la mise en place d'une cuiller 113 (fig. 3G). A titre illustratif, on a représenté une cuiller différente de la cuiller 13 : son réceptacle 114 est de forme évasée et comporte, au lieu d'un manche 16, des ailettes 116 de préhension. Mais son volume intérieur est de même calculé pour être un multiple de la quantité de poudre contenue dans deux alvéoles du barillet et le volume recherché peut être obtenu en jouant sur la hauteur du réceptacle 114. Cette cuiller peut être graduée.

La cuiller 113 comporte deux pattes d'accrochage 131 (essentiellement similaires aux pattes d'accrochage 31 de la cuiller 13), qui coopèrent avec les fentes 112 pour le maintien en place de la cuiller 113.

Le barillet doseur 121 comporte au moins quatre alvéoles 122, avantageusement tronconiques pour faciliter le passage de la poudre, et de façon préférée, telle que représentée, le barillet comporte huit alvéoles réparties régulièrement de sorte que deux d'entre elles soient en correspondance avec les orifices de sortie 106 et 106a de la plaque 115b et que deux autres soient en correspondance avec les orifices de délivrance 109 et 109a. La partie externe du barillet est configurée en roue à rochet 123, avec un nombre de dents correspondant au nombre d'alvéoles, pour l'entraîner en rotation comme décrit ci-dessous. Un axe central 125 fait saillie à la partie supérieure du barillet et traverse l'orifice central 107 de la plaque 115b. Le barillet doseur comporte un évidement central 124 destiné à être placé sur l'axe central 116 de la plaque 115C.

Sur cet axe 125, est monté un agitateur 126 à pales (par exemple 4) qui est ainsi entraîné en rotation lorsque le barillet tourne. L'agitation de la poudre ainsi réalisée empêche son agglomération ou la formation de voûtes, lorsque la poudre est hygroscopique.

Il est prévu un poussoir 118 logé dans le corps inférieur 104 dont la périphérie, afin de faciliter sa préhension, comporte deux surfaces planes 104a et 104b reliées par une section arrondie 104c de rayon de courbure légèrement inférieur au rayon du corps supérieur 103. Le poussoir 118 possède une forme générale correspondant à celle du corps inférieur, à savoir une section centrale arrondie 118C, et vient compléter l'extrémité ouverte 107 du corps inférieur à l'opposé de la section arrondie 104c. Les deux parties latérales 118a et 118b du poussoir guident celui-ci dans le corps inférieur 104.

Entre les parties latérales 118a et 118b, est logé un élément de rappel 220 du poussoir qui peut être un ressort tel que représenté sur les figures A à C. On peut aussi envisager une lame souple disposée en oblique entre une partie latérale et l'autre, venant prendre appui sur le barillet lorsque le poussoir est enfoncé. Un bras 127 fait saillie du côté interne de la partie arrondie 118C et se termine par un crochet venant engrener la roue à rochet 123. De la sorte, lorsque le poussoir est enfoncé, le bras 127 fait tourner le barillet d'un angle de 45° (dans le cas de huit alvéoles et de huit dents sur la roue à rochet).

A chaque poussée exercée sur le poussoir 118, deux alvéoles sont amenées en correspondance avec les orifices de sortie 106 et 106a de la plaque 115b et se remplissent ; deux alvéoles, en alignement perpendiculairement aux deux alvéoles en cours de remplissage, sont amenées au-dessus des orifices de délivrance 109 et 109a et se vident dans la cuiller ; deux alvéoles pleines et deux alvéoles vides sont en attente.

L'une des parties latérales (118a ici), en fait celle se trouvant en face de la butée 110, se prolonge par un bras 119 descendant vers la paroi de fond 115C du corps inférieur jusqu'en dessous de la butée 110 de sorte que, lorsqu'on tente d'enfoncer le poussoir en l'absence de la cuiller, ce bras 119 vient buter sur la butée 110 en empêchant le déplacement du poussoir.

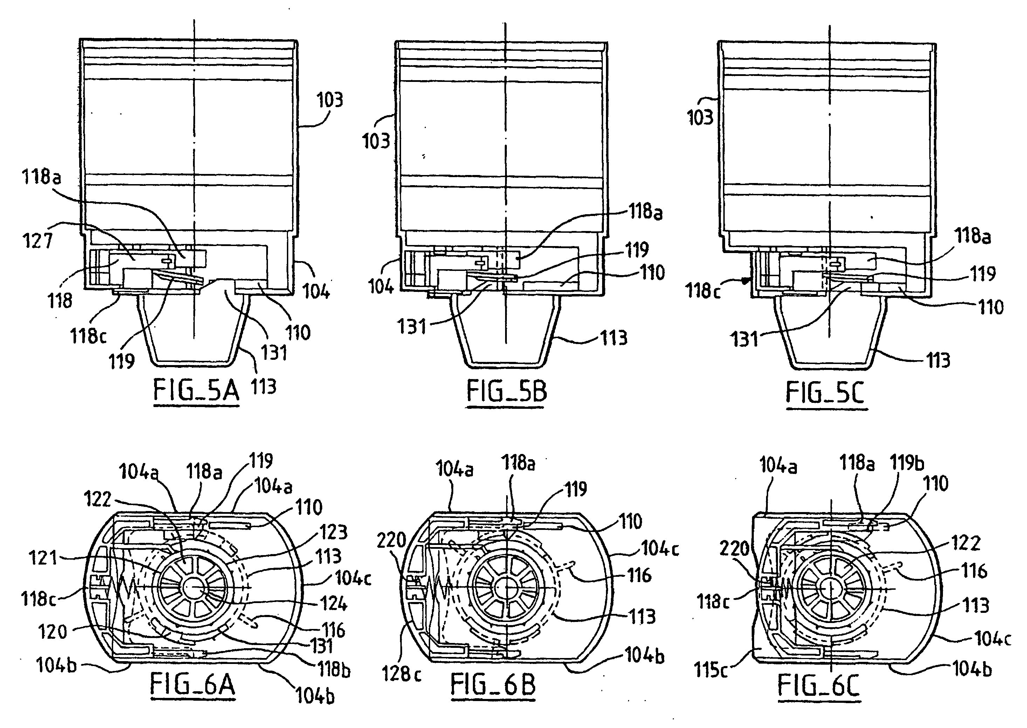

Lorsque les pattes d'accrochage 131 de la cuiller sont logées dans les fentes 112 et amenées en blocage dans les évidements 131a, celle qui se trouve du côté du bras 119 le soulève à un niveau supérieur à celui de la butée 110, autorisant ainsi le déplacement du poussoir et donc la rotation du barillet (figures 5A à 5C et 6A à 6C).

On notera une différence avec la première variante : dans celle-ci, en l'absence de la cuiller, le poussoir peut être enfoncé mais l'élément doseur se déplace longitudinalement et ne vient pas en regard de l'orifice de vidange tandis que dans la deuxième variante, en l'absence de la cuiller, c'est le déplacement du poussoir qui est empêché. Mais la fonction sécurité enfants est la même que celle décrite pour la première variante.

A noter également que le remplissage en poudre du corps supérieur se faisant par le haut dans le doseur monté à l'exception du couvercle, il y aura avant la première utilisation six alvéoles vides en attente et que de ce fait, à la première utilisation, il faudra deux poussées pour amener les alvéoles pleins en alignement avec ces orifices de délivrance. Ceci constituera pour l'utilisateur une confirmation d'un élément d'inviolabilité également présent sur le flacon (par exemple bande de jonction entre le corps supérieur et un capot de protection 140 de l'ensemble corps inférieur 104 et cuiller 113).

La figure 7A illustre un capot extérieur de section elliptique à enfiler à la partie inférieure du flacon doseur des figures 1A à 1F et constitué d'un fond 40 et d'une jupe 41, tandis que la figure 7B illustre un capot de section circulaire pour la partie inférieure du flacon doseur des figures 3A à 3G et constitué d'un fond 140 et d'une jupe 141.

Les différentes variantes du flacon doseur selon l'invention sont réalisées de manière simple et économique en matière plastique. Le montage du doseur et de l'élément poussoir est effectué avant mise en place et soudage du fond 8 muni ou non de la cuiller doseuse, puis mise en place du capot. Après remplissage du corps supérieur, le couvercle 1 est mis en place et fixé, par exemple par soudage.

Dans la première variante, le corps 2 est moulé d'un seul tenant mais le fond 8 lui est soudé. Dans la deuxième variante, les corps supérieur 103, corps inférieur 104 et plaque 115c formant fond du corps inférieur 104 sont d'un seul tenant et une trémie 105 leur est adjointe, par exemple par soudage. Le barillet et le poussoir sont mis en place, ainsi que le capot. Après remplissage du corps supérieur, le couvercle 101 est mis en place et fixé de façon inamovible, par exemple par soudage.

## Revendications

1. Flacon doseur de poudre comprenant un corps supérieur contenant la poudre à délivrer, fermé après remplissage, par un couvercle (1, 101) inamovible, dont le fond (5, 105) comporte au moins un orifice de sortie de poudre (6, 106, 106a), un corps inférieur (4, 104) à fond inamovible (8, 115c) qui comporte au moins un orifice de délivrance de poudre (9, 109, 109a), chaque orifice de sortie (6, 106, 106a) et chaque orifice de délivrance (9, 109, 109a) étant de mêmes section et dimensions et n'étant pas alignés verticalement, un dispositif doseur (21, 121) comprenant un poussoir (18, 118), mobile entre au moins un orifice de sortie et au moins un orifice de délivrance, et une cuiller de réception de dose en poudre (13, 113). **caractérisé en ce que** le fond (8, 115c) du corps inférieur (4, 104) comporte des éléments de fixation (11, 12; 111, 112) de la cuiller de réception (13, 113) dont les éléments d'accrochage (31, 131) coopèrent avec des éléments de guidage (22b, 34) ou de butée (119) liés au dispositif mobile de façon à ne permettre la délivrance d'une dose de poudre par l'orifice de délivrance de poudre que lorsque la cuiller de réception est fixée au corps inférieur.

2. Flacon doseur selon la revendication 1, **caractérisé en ce que** lesdits éléments de fixation sont constitués par une jupe circulaire (11, 111) entourant l'orifice de sortie (9, 109, 109a) à l'extérieur de laquelle sont percées deux fentes (12, 112) en arcs de cercle concentriques, que ladite, cuiller de réception de dose (13, 113) a une section circulaire s'adaptant à la jupe (11, 111) et comporte deux pattes d'accrochage (31) destinées à passer dans lesdites fentes (12).

3. Flacon doseur selon la revendication 2, **caractérisé en ce que** les deux pattes (31, 131) ont un bord avant comportant un évidement (31a, 131a) au niveau du bord de la cuiller (13, 131) et un bord arrière (31b, 131b) oblique.

4. Flacon doseur selon la revendication 3, **caractérisé en ce que** l'orifice de sortie (5) et l'orifice de délivrance (9) sont décalés angulairement par rapport à l'axe de déplacement du poussoir (18), **en ce qu'**un tube doseur (23) comporte des éléments de guidage (22b, 34) et est monté de façon articulée sur l'élément poussoir (18) de sorte que, pendant la course du poussoir, les éléments de guidage (22b, 34) prennent appui sur lesdites pattes d'accrochage (31) en déplaçant angulairement, par rapport à l'axe de déplacement du poussoir, le tube doseur entre l'orifice de sortie (6) du fond (5) du corps supérieur (3) et l'orifice de délivrance (9) du fond (8) du corps inférieur (4).

5. Flacon doseur selon la revendication 4, **caractérisé en ce que** le tube doseur (23) est monté à l'extrémité d'une aile (22a) d'un bras en L (22), l'aile libre (22b) venant prendre appui à l'extérieur de l'une des pattes d'accrochage (31) de la cuiller (13) mise en place ; le tube doseur (23) est équipé à sa partie inférieure d'une plaquette de guidage (27) dont un bord arrondi (34) vient en appui à l'intérieur de l'autre patte d'accrochage (31), et est équipé à sa partie supérieure d'une plaque (35) de dimensions telles qu'elle obture l'orifice (6) du fond (5) du corps supérieur lorsque le tube doseur n'est pas aligné avec celui-ci, et le bras en L est articulé le long de son arête sur une tige (19) faisant saillie du poussoir (18) parallèlement à l'axe de déplacement de celui-ci.

6. Flacon doseur selon la revendication 5, **caractérisé en ce que** l'aile libre (22b) du bras en L (22) prend appui, en position de repos du poussoir, sur une butée (32) faisant saillie du fond (5) du corps supérieur (3).

7. Flacon doseur selon la revendication 3, **caractérisé en ce que** le fond (105) du corps supérieur est constitué par une trémie (115, 115a) fermée à sa partie inférieure par une plaque (115b) comportant deux orifices de sortie (106, 106a) diamétralement alignés ; le fond (115c) du corps inférieur comporte deux orifices de délivrance (109, 109a) diamétralement alignés perpendiculairement aux orifices de sortie (106, 106a) ; le dispositif doseur est constitué par un barillet (121) comportant au moins quatre alvéoles (122) dont deux sont en alignement avec lesdits orifices de sortie et deux en alignement avec lesdits orifices de délivrance ; la partie périphérique externe du barillet est une roue à rochet (123) ; le poussoir (118) comporte un premier bras (127) à crochet engrenant la roue à rochet (123) et un deuxième bras (119) oblique venant, en position de repos du poussoir et en l'absence de la cuiller de réception, en butée sur une butée (110) faisant saillie de la paroi interne de la plaque de fond (115c) du corps inférieur, de sorte que lors de la mise en place de la cuiller (113), l'une des pattes d'accrochage (131) soulève le bras oblique au-dessus de la butée (110) en libérant le déplacement du poussoir et donc la rotation du barillet pour amener des alvéoles (122) pleines au-dessus des orifices de délivrance (109, 109a) et des alvéoles vides au-dessous des orifices de sortie (106, 106a).

8. Flacon doseur selon la revendication 7, **caractérisé en ce que** le barillet (121) porte un axe (125) traversant par un orifice (207) le fond (115b) du corps supérieur, axe sur lequel est monté un agitateur de poudre (126) ainsi entraîné en rotation lors d'un déplacement du poussoir.

9. Flacon doseur selon la revendication 7 ou 8, **caractérisé en ce que** le barillet (121) comporte huit alvéoles (122).

10. Flacon doseur selon l'une quelconque des revendications 1 à 9, **caractérisé en de que** le poussoir (18, 118) est muni d'un élément de rappel le ramenant en position de repos.

11. Flacon doseur selon la revendication 10, **caractérisé en ce que** l'élément de rappel est constitué par une patte souple (20) coopérant avec une surface (20a) du fond (5) du corps supérieur (3).

12. Flacon doseur selon la revendication 10, **caractérisé en ce que** l'élément de rappel est constitué par un ressort (220).

## Claims

1. A flask for dispensing powder and comprising an upper body containing the powder to be delivered, closed after filling by a non-detachable lid (1, 101), of which the end (5, 105) comprises at least one powder outlet orifice (6, 106, 106a), a bottom body (4, 104) with a non-removable bottom (8, 115c) which comprises at least one outer delivery orifice (9, 109, 109a), each outlet orifice (6,106, 106a) and each delivery orifice (9, 109, 109a) being of the same cross-section and dimensions and not being vertically aligned, a dispensing device (21, 121) comprising a push member (18, 118) adapted for movement between at least one outlet orifice and at least one delivery orifice, and a spoon for receiving a dose of powder (13, 113), **characterised in that** the bottom (8, 115c) of the bottom body (4, 104) comprises fixing elements (11, 12; 111, 112) for the receiving spoon (13, 113), hooking elements (31, 131) of which co-operate with guide elements (22b, 34) or abutment elements (119) connected to the movable device in such a way as to allow the delivery of a dose of powder through the powder delivery orifice only when the receiving spoon is fixed to the bottom body.

2. A dispensing flask according to claim 1, **characterised in that** the said fixing elements are constituted by a circular skirt (11, 111) surrounding the outlet orifice (9, 109, 109a) outside of which there are two pierced slots (12, 112) in the form of arcs of concentric circles and **in that** the said dose receiving spoon (13, 113) has a circular cross-section matching the skirt (11, 111) and comprises two attachment lugs (31) intended to fit into the said slots (12).

3. A dispensing flask according to claim 2, **characterised in that** the two lugs (31, 131) have a front edge comprising a cut-out (31a, 131a) at the level of the edge of the spoon (13, 131) and an oblique rear edge (31b, 131b).

4. A dispensing flask according to claim 3, **characterised in that** the outlet orifice (5) and the delivery orifice (9) are angularly offset in relation to the axis of displacement of the push member (18), **in that** a dispensing tube (23) comprises guide elements (22b, 34) and is mounted in articulated manner on the push element (18) in such a way that, during the travel of the push member, the guide elements (22b, 34) bear on the said attachment lugs (31), angularly displacing the dispensing tube between the outlet orifice (6) in the bottom (5) of the upper body (3) and the delivery orifice (9) in the bottom (8) of the bottom body (4) and in relation to the axis of displacement of the push member.

5. A dispensing flask according to claim 4, **characterised in that** the dispensing tube (23) is mounted at the end of a flange (22a) of an L-shaped arm (22), the free flange (22b) bearing on the outside of one of the attachment lugs (31) of the spoon (13) when this is placed in position; the dispensing tube (23) is in its bottom part equipped with a guide plate (27) a rounded edge (34) of which bears on the inside of the other attachment lug (31) and has in its upper part a plate (35) of such dimensions that it occludes the orifice (6) in the bottom (5) of the upper body when the dispensing tube is not aligned therewith, and the L-shaped arm is articulated along its edge on a rod (19) projecting from the push member (18) parallel with the axis of displacement of this latter.

6. A dispensing flask according to claim 5, **characterised in that** the free flange (23b) of the L-shaped arm (22), when in the position of rest of the push member, bears on an abutment (32) projecting from the bottom (5) of the upper body (3).

7. A dispensing flask in accordance with claim 3, **characterised in that** the bottom (105) of the upper body is constituted by a funnel (115, 115a) closed in its bottom part by a plate (115b) comprising two diametrically aligned outlet orifices (106, 106a); the bottom (115c) of the bottom body comprises two delivery orifices (109, 109a) which are diametrically aligned at right-angles to the outlet orifices (106, 106a); the dispensing device is constituted by a cylindrical member (121) comprising at least four honeycomb cells (122), two of which are aligned with the said outlet orifices while two are aligned with the said delivery orifices; the outer peripheral part of the cylindrical member is a ratchet wheel (123); the push member (118) comprises a first arm (127) with a hook engaging the ratchet wheel (123) and an oblique second arm (119) which, in the position of rest of the push member and in the absence of the receiving spoon, abuts an abutment member (110) projecting from the inside wall of the bottom plate (115c) of the bottom body so that when the spoon (113) is placed in position, one of the attachment lugs (131) lifts the oblique arm above the abutment (110), releasing displacement of the push member and therefore rotation of the cylindrical member in order to bring filled honeycomb cells (122) over delivery orifices (109, 109a) and empty honeycomb cells underneath outlet orifices (106, 106a).

8. A dispensing flask according to claim 7, **characterised in that** the cylindrical member (121) carries a spindle (125) which, via an orifice (207), passes through the bottom (115b) of the upper body, on which spindle is mounted a powder stirrer (126) which is thus caused to rotate upon a displacement of the push member.

9. A dispensing flask according to claim 7 or 8, **characterised in that** the cylindrical member (121) comprises eight honeycomb cells (122).

10. A dispensing flask according to any one of claims 1 to 9, **characterised in that** the push member (18, 118) is fitted with a restoring element which brings it back to the rest position.

11. A dispensing flask according to claim 10, **characterised in that** the restoring element is constituted by a flexible lug (20) co-operating with a surface (20a) on the bottom (5) of the upper body (3).

12. A dispensing flask according to claim 10, **characterised in that** the restoring element consists of a spring (220).

## Patentansprüche

1. Pulver-Dosierflakon mit einem oberen Körper, welcher das ausgebende Pulver enthält und nach Befüllung mittels eines nicht-entfernbaren Deckels (1, 101) verschlossen wird und dessen Boden (5, 105) zumindest eine Pulver-Auslaßöffnung (6, 106, 106a) aufweist, einem unteren Körper (4, 104) mit einer nicht-entfernbaren Bodenwand (8, 115), die zumindest eine Pulver-Ausgabeöffnung (9, 109, 109a) aufweist, wobei jede Auslaßöffnung (6, 106, 106a) und jede Ausgabeöffnung (9, 109, 109a) denselben Querschnitt und dieselben Abmessungen haben und nicht vertikal fluchten, einer Dosiereinrichtung (21, 121), die ein Druckelement (18, 118), welches zwischen der zumindest einen Auslaßöffnung und der zumindest einen Ausgabeöffnung beweglich ist, und einem Aufnahmelöffel (13, 113) für eine Pulverdosis aufweist,
**dadurch gekennzeichnet, daß**
der Boden (8, 115c) des unteren Körpers (4, 104) Befestigungselemente (11, 12; 111, 112) für den Aufnahmelöffel (13, 113) aufweist, dessen Kopplungselemente (31, 131) mit Führungselementen (22b, 34) oder Anschlagelementen (119) zusammenwirken, die mit der beweglichen Einrichtung in der Weise verbunden sind, daß sie das Ausgeben einer Pulverdosis durch die Pulver-Ausgabeöffnung nur erlauben, wenn der Aufnahmelöffel in dem unteren Körper befestigt ist.

2. Dosierflakon nach Anspruch 1, **dadurch gekennzeichnet, daß** die Befestigungselemente gebildet sind mit einer kreisförmigen Schürze (11, 111), die die Auslaßöffnung (9, 109, 109a) umgibt und an deren Außenseite zwei Schlitze (12, 112) in Form konzentrischer Kreisbögen durchbrochen sind, wobei der Aufnahmelöffel (13, 113) für die Dosis einen kreisförmigen Querschnitt aufweist, der an die Schürze (11, 111) angepaßt ist und zwei Kupplungsklauen (31) aufweist, die dazu bestimmt sind, durch die Schlitze (12) zu greifen.

3. Dosierflakon nach Anspruch 2, **dadurch gekennzeichnet, daß** die beiden Kupplungsklauen (31, 131) an einer Vorderseite eine Aussparung (31a, 131a) auf Höhe des Rands des Löffels (13, 131) und einen abgeschrägten hinteren Rand (31b, 131b) aufweisen.

4. Dosierflakon nach Anspruch 3, **dadurch gekennzeichnet, daß** die Auslaßöffnung (5) und die Ausgabeöffnung (9) winkelig versetzt sind gegenüber der Bewegungsachse des Druckelements (18), und daß ein Dosierrohr (23) die Führungselemente (22b, 34) aufweist und auf gelenkige Weise über dem Druckelement (18) in der Art angeordnet ist, daß während des Vorgangs des Drückens die Führungselemente (22b, 34) an den Kupplungsklauen (31) zur Anlage kommen und dabei das Dosierrohr winkelig versetzen zwischen die Auslaßöffnung (6) des Bodens (5) des oberen Körpers (3) und die Ausgabeöffnung (9) des Bodens (8) des unteren Körpers (4).

5. Dosierflakon nach Anspruch 4, **dadurch gekennzeichnet, daß** das Dosierrohr (23) an dem äußeren Ende eines Schenkels (22a) eines L-förmigen Arms (22) angeordnet ist, wobei ein freier Schenkel (22b) bis zur Anlage an der Außenseite von einer der Kupplungsklauen (31) des eingesetzten Löffels reicht; wobei das Dosierrohr (23) an seinem unteren Teil mit einer Führungsplatte (27) versehen ist, deren abgerundeter Rand (34) an der Innenseite der anderen Kupplungsklaue (31) zur Anlage kommt, und an seinem oberen Teil mit einer Platte (35) versehen ist, deren Abmessungen so sind, daß sie die Öffnung (6) des Bodens (5) des oberen Körpers verschließt, wenn das Dosierrohr nicht damit ausgerichtet ist, und wobei der L-förmige Arm längs seiner Kante gelenkig verbunden ist mit einer Stange (19), die einen Vorsprung des Druckelements (18) parallel zu der Achse seiner Verschiebung bildet.

6. Dosierflakon nach Anspruch 5, **dadurch gekennzeichnet, daß** der freie Schenkel (22b) des L-förmigen Arms (22) in einer Ruheposition des Druckelements zur Anlage kommt an einem Anschlag (32), der als Vorsprung des Bodens (5) des oberen Körpers (3) gebildet ist.

7. Dosierflakon nach Anspruch 3, **dadurch gekennzeichnet, daß** der Boden (105) des oberen Körpers gebildet ist mittels eines Trichters (115, 115a), der an seinem unteren Teil durch eine Platte (115b) mit zwei diametral gegenüberliegenden Auslaßöffnungen (106, 106a) verschlossen ist; wobei der Boden (115c) des unteren Körpers zwei diametral angeordnete Ausgabeöffnungen (109, 109a) aufweist, die rechtwinkelig zu den Auslaßöffnungen (106, 106a) angeordnet sind; wobei die Dosiereinrichtung durch einen Trommelkörper (121) mit mindestens vier Zellen (122) gebildet ist, von denen zwei mit den Auslaßöffnungen ausgerichtet sind und zwei mit den Ausgabeöffnungen ausgerichtet sind; wobei der äußere Umfangsbereich des Trommelkörpers ein Sperrzahnrad (123) ist; wobei das Druckelement (118) einen ersten hakenförmigen Arm (127), der in das Sperrzahnrad (123) eingreift, und einen zweiten schräg vorspringenden Arm (119) aufweist, der in der Ruheposition des Druckelements und in Abwesenheit des Aufnahmelöffels an einem Anschlag (110) anliegt, der als Vorsprung der Innenwand der Bodenplatte (115c) des unteren Körpers gebildet ist, in der Art, daß beim Einsetzen des Löffels (113) die eine der Kupplungsklauen (131) den schrägen Arm über den Anschlag (110) anhebt und die Verschiebung des Druckelements und dann die Drehung des Trommelkörpers zum Befördern der vollen Zellen (122) über die Ausgabeöffnungen (109, 109a) und der leeren Zellen unter die Auslaßöffnungen (106, 106a) freigibt.

8. Dosierflakon nach Anspruch 7, **dadurch gekennzeichnet, daß** der Trommelkörper (121) eine Achse (125) trägt, die durch eine Öffnung (207) den Boden (115b) des oberen Körpers durchquert, wobei auf der Achse ein Pulver-Rührer (126) angeordnet ist und bei einer Bewegung des Druckelements in einer Drehbewegung mitgenommen wird.

9. Dosierflakon nach Anspruch 7 oder 8, **dadurch gekennzeichnet, daß** der Trommelkörper (121) acht Zellen (122) aufweist.

10. Dosierflakon nach einem der Ansprüche 1 bis 9, **dadurch gekennzeichnet, daß** das Druckelement (18, 118) mit einem Rückführungselement in die Ruheposition versehen ist.

11. Dosierflakon nach Anspruch 10, **dadurch gekennzeichnet, daß** das Rückführelement gebildet ist durch eine flexible Klaue (20), die mit einer Oberfläche (20a) des Bodens (5) des oberen Körpers (3) zusammenwirkt.

12. Dosierflakon nach Anspruch 10, **dadurch gekennzeichnet, daß** das Rückführelement durch eine Feder (220) gebildet ist.
